# DEMANDE DE BREVET EUROPEEN

(11) **EP 2 774 757 A1**
(43) Date de publication de la demande: **10.09.2014**
(21) Numéro de dépôt: 14157943.3
(22) Date de dépôt: 05.03.2014
(51) Int. Cl.: B32B 29/00, B32B 29/02, B32B 29/06, B32B 29/08, B32B 37/12, B32B 27/20, B32B 38/06, B32B 27/00, B32B 27/36, B32B 27/32, B32B 27/34, B32B 5/02, B32B 7/12, B32B 27/10, B32B 3/28, D21H 27/32, D21H 27/42, B32B 7/06

(54) **Produit stratifié jetable**

(30) Priorité: 07.03.2013 BE 201300146
(71) Demandeur: Happy Paper, 7850 Enghien (BE)
(72) Inventeur: De Witte, Paul, 1700 Dilbeek (BE)
(74) Mandataire: Gevers Patents

(57) **Abrégé**

Produit stratifié jetable comprenant au moins une première couche supérieure formant une barrière aux liquides et agencée pour être visible lors d'une utilisation dudit produit et au moins une deuxième couche inférieure en un matériau en papier ouaté gaufré agencée pour être en contact avec une surface de service et liée à ladite première couche supérieure.

## Description

La présente invention se rapporte à un produit stratifié jetable comprenant au moins une première couche supérieure formant une barrière aux liquides et agencée pour être visible lors d'une utilisation dudit produit et au moins une deuxième couche inférieure en un matériau en papier ouaté gaufré agencée pour être en contact avec une surface de service et liée à ladite première couche supérieure.

Un tel produit stratifié jetable est connu du document WO2008/092811 qui divulgue une nappe à usage unique constituée d'une pluralité de couches de différents matériaux superposées les unes sur les autres et fixées les unes aux autres avec un adhésif sous forme d'une solution aqueuse à séchage rapide. En particulier, la nappe décrite dans ce document comprend une couche inférieure en un matériau papier gaufré destinée à se trouver en contact avec une surface d'appui et une couche d'étanchéité en un matériau imperméable aux liquides qui est fixée sur la face supérieure de la couche inférieure. Eventuellement, la couche d'étanchéité est recouverte et fixée avec le même adhésif à une couche supérieure en papier absorbant destinée à recevoir et à absorber les liquides déversés en cours de l'utilisation de la nappe.

Un autre produit stratifié jetable est connu du document US4115176 qui porte sur un produit stratifié en papier comprenant une couche inférieure poreuse en un matériau en papier présentant une masse surfacique de l'ordre de 15 à 50 g/m² et une couche supérieure en un matériau plastique, par exemple du polyéthylène ou du polypropylène. Le produit obtenu est particulièrement destiné à être utilisé en tant que nappe de table ou comme drap jetable (par exemple en milieu hospitalier). La surface de service est donc une table, un brancard, une desserte ou analogue.

Dans un cas, comme dans l'autre, ce type de produit jetable et imperméable doit présenter une certaine qualité au toucher pour donner un « rendu » qualitatif au consommateur. Il ne doit pas présenter un aspect « toile cirée » ou « bâche plastique » et doit se rapprocher le plus possible d'un produit de type « tissu » de qualité, que ce soit en utilisation drap ou en utilisation nappe. En effet, le consommateur est à la recherche d'une certaine épaisseur synonyme de qualité et d'une certaine souplesse tout en maintenant la tenue du produit.

Malheureusement, un tel produit stratifié, pour présenter cette qualité recherchée par le consommateur, doit être formé au départ d'une quantité importante de matière première, essentiellement pour la constitution de ladite couche inférieure en un matériau en papier qui est obtenu au départ d'eau et de pâte à papier, c'est-à-dire au départ d'une matière fibreuse, le plus souvent d'origine végétale, préparée en vue de subir au cours de la fabrication du papier, des traitements tels que le raffinage, la désintégration et l'épuration. Durant la fabrication du papier, cette matière fibreuse, mise en suspension, peut être additionnée ou non de diverses matières telles que des charges, des adhésifs ou encore des colorants.

Une autre problématique liée aux produits stratifiés jetables actuellement connus est leur élimination après utilisation. En effet, dans le cas d'une nappe jetable, l'utilisateur est contraint de la jeter dans la catégorie des déchets encombrants, c'est-à-dire parmi les déchets qui ne peuvent pas être recyclés dès lors qu'ils présentent des composants non ou peu biodégradables ou des composants de différentes natures assemblés de telle sorte qu'il n'est pas possible d'orienter le produit utilisé vers une filière de recyclage particulière et adéquate. Par exemple, dans le cas du document WO2008/092811, dès lors que les couches en un matériau papier et en un matériau de type polymère sont collées l'une à l'autre avec des adhésifs de type « glue » (selon la technique du « gluing » notamment employée dans le document WO2008/092811), elles sont jointes et attachées l'une à l'autre fermement sans possibilité de pouvoir les séparer ou les peler l'une de l'autre.

Or, de nos jours, les préoccupations environnementales sont de plus en plus présentes chez les fabricants et chez les consommateurs qui sont d'ailleurs en demande de produits plus écologiques. Il existe donc un réel besoin de pouvoir proposer des produits plus « verts », c'est-à-dire des produits plus respectueux de l'environnement nécessitant moins de matières premières issues directement de nos écosystèmes pour leur fabrication.

En outre, il existe également un réel besoin de pouvoir proposer des produits qui peuvent être, après utilisation, aisément recyclés ou biodégradés. Les consommateurs sont en effet bien conscients qu'il convient de minimiser le volume des déchets produits par ménage et qu'il faut dès lors se tourner vers des produits plus « verts ».

L'invention a pour but de pallier les inconvénients de l'état de la technique en procurant d'une part un produit stratifié et jetable présentant la sensation de qualité chez le consommateur tout en limitant significativement les quantités de matières premières utilisées lors de la fabrication. D'autre part, l'invention a pour objectif de procurer un produit stratifié jetable qui peut être aisément recyclé et/ou biodégradé après utilisation, ceci dans un souci de respect de l'environnement.

Pour résoudre les problèmes mentionnés plus haut, il est prévu suivant l'invention, un produit stratifié jetable tel qu'indiqué au début, caractérisé en ce que ladite première couche supérieure et ladite deuxième couche inférieure sont détachables l'une de l'autre.

Par les termes « produit jetable», on entend par exemple, au sens de la présente invention, une nappe, un napperon, un set de table, un chemin de table, un drap de lit, une alèse ou encore un sous-verre mais aussi tout autre type de produit pouvant être utilisé puis jeté après une ou plusieurs utilisations, comme par exemple des bâches de protection lors de chantier de peintures qui doivent avoir une face imperméable et une face absorbante pour ne pas étaler les gouttes de peinture lorsque l'ouvrier marche sur une de ces gouttes. Dans un tel cas, le produit jetable est utilisé dans le sens inverse du sens normal de service mentionné au début.

Par les termes « une première couche supérieure formant une barrière aux liquides », on entend, au sens de la présente invention, une couche présentant une certaine résistance à l'imprégnation de l'eau, ce qui est fonction de la constitution de ladite couche. Typiquement, une couche formant une barrière aux liquides suivant l'invention est une couche qui ne s'imprègne pas du liquide au moins pendant les minutes qui suivent une application dudit liquide sur ladite couche.

Plus particulièrement, ladite couche ne doit pas s'imprégner ou s'inhiber du liquide pendant au moins 5 minutes, ce qui représente, par exemple, le temps nécessaire pour essuyer le contenu d'un verre qui serait renversé sur une table.

Par les termes « matériau en papier ouaté gaufré», on entend, au sens de la présente invention, un matériau comprenant du papier (c'est-à-dire une matière se présentant en feuille mince et sèche composée essentiellement de fibres ou de morceaux de fibres entremêlés et adhérant les uns aux autres), présentant un grammage (masse surfacique) compris entre 10 et 40 g/m², de préférence compris entre 15 et 25 g/m², et comprenant des creux et des reliefs obtenus suite à un gaufrage.

Par ailleurs, le papier ouaté suivant l'invention est soumis à un gaufrage afin de recevoir, en creux ou en relief, un dessin, généralement par pression d'un rouleau ou d'une plaque gravée. Plus particulièrement, le gaufrage du papier est réalisé par son passage entre des cylindres dont l'un porte gravés en creux et l'autre gravés en relief les dessins à reproduire.

La matière fibreuse utilisée pour la fabrication d'un matériau papier, et plus particulièrement pour l'obtention de la pâte à papier, consiste par exemple en des fibres cellulosiques généralement extraites au départ de certains végétaux dont les arbres, en particulier les conifères.

Par les termes « une deuxième couche inférieure liée à ladite première couche supérieure », on entend, au sens de la présente invention, une deuxième couche inférieure que l'on attache à ladite première couche supérieure au moyen d'un lien, ledit lien étant une colle.

De préférence, ladite colle est une colle non aqueuse projetée à chaud entre ladite première couche supérieure et ladite deuxième couche inférieure de telle façon à lier ces deux couches.

Un tel produit stratifié jetable suivant l'invention, dont ladite deuxième couche inférieure comprend un matériau en papier ouaté gaufré, a pour avantage de n'être formé qu'au départ d'une quantité réduite de matières premières tout en conférant une qualité correcte audit produit stratifié jetable, notamment au toucher mais aussi en terme de propriétés mécaniques (résistance à la traction, marquage des plis, ...).

Par ailleurs, un produit stratifié jetable selon l'invention dans lequel ladite première couche supérieure et ladite deuxième couche inférieure sont détachables l'une de l'autre permet, après séparation de ces couches, de disposer d'une part d'une couche en papier et, d'autre part, d'une couche en un matériau formant une barrière aux liquides.

D'une part, l'utilisation d'un matériau en papier ouaté gaufré permet d'obtenir un produit stratifié jetable qui est de qualité identique, voire supérieure par rapport à un produit jetable imperméable à couche en papier existant actuellement, tout en réduisant de manière conséquente la quantité de matières premières essentiellement pour former ladite deuxième couche inférieure agencée pour être en contact avec une surface de service, par exemple la surface d'une table, d'un meuble ou encore d'un matelas.

Une sensation de qualité au toucher et une qualité correcte peuvent être en effet obtenue en utilisant une quantité en poids bien moindre de matériau en papier ouaté gaufré (la moitié environ par rapport à une deuxième couche conventionnelle de papier à sensation de qualité égale) pour former ladite deuxième couche inférieure, en comparaison avec la quantité en poids de matière papier à utiliser pour former les produits stratifiés existant actuellement.

D'autre part, puisque les couches supérieure et inférieure du produit stratifié jetable selon l'invention sont séparables et détachables l'une de l'autre, ceci sur l'ensemble de leur surface, il est possible d'orienter chacune d'elles vers une filière de recyclage adéquate : par exemple vers une filière de recyclage du papier et une filière distincte de recyclage d'un polymère. Eventuellement, si seule la couche en papier peut être recyclée, par exemple lorsque la couche formant une barrière aux liquides est formée par un polymère non recyclage, seule cette dernière couche sera jetée comme déchet encombrant. Ceci permet toutefois de minimiser fortement le volume occupé par le produit après son utilisation, par exemple lorsque l'utilisateur forme une boule avec la couche de polymère séparée de la couche en papier aouté gaufré.

Tout ceci s'inscrit tout à fait dans le cadre d'une politique de respect de l'environnement et répond tout à fait aux attentes des consommateurs puisque moins de matière première doit être utilisée pour obtenir un produit de qualité équivalente à ceux connus actuellement, ce qui permet par ailleurs de minimiser fortement les coûts de production de produits jetables. En outre, puisque ladite deuxième couche inférieure en un matériau en papier ouaté gaufré est une couche exclusivement formée par des fibres cellulosiques naturelles qui sont donc biodégradables et que ladite deuxième couche inférieure peut être totalement séparée (c'est-à-dire séparée sur l'ensemble de sa surface) de ladite première couche formant une barrière aux liquides, le produit stratifié jetable suivant l'invention s'inscrit d'autant plus dans une politique de respect de l'environnement dès lors que les couches séparées peuvent être éliminées de façon adéquate selon des filières de recyclage et/ou de biodégradation adéquates et distinctes.

Avantageusement, selon un premier mode de réalisation suivant l'invention, ladite au moins une première couche supérieure est constituée d'un polymère biodégradable choisi dans le groupe constitué des biopolymères issus de végétaux, des biopolymères produits par polymérisation de matières premières renouvelables, des biopolymères produits par des microorganismes, des biopolymères synthétiques, des polymères d'origine fossile associés à un additif favorisant leur biodégradabilité et leurs mélanges.

Une utilisation de biopolymères pour former ladite au moins une première couche supérieure permet de renforcer le caractère « vert » du produit jetable suivant l'invention. En effet, de tels polymères sont biodégradables et peuvent donc être transformés en des molécules plus petites et moins polluantes par des microorganismes tels que des bactéries et des champignons, dans des conditions naturelles ou contrôlées, pour donner lieu à de l'eau, du dioxyde de carbone, du méthane, des composés inorganiques, de la biomasse et éventuellement à des sous-produits non toxiques. De telles propriétés de ladite première couche supérieure confèrent un caractère écologique à la fois recherché par les fabricants et par les consommateurs, ce qui est particulièrement avantageux.

Lesdits biopolymères biodégradables issus des végétaux peuvent être formés au départ de polymères naturels comme par exemple l'amidon, la cellulose et la lignine pouvant être extraits de végétaux tels que le maïs, la pomme de terre ou encore le blé. A titre d'exemple, les biopolymères suivant peuvent être obtenus au départ de végétaux et peuvent convenir à la fabrication de films plastiques transparents totalement biodégradables qui sont adéquats pour la réalisation d'un produit jetable suivant l'invention : le polycaprolactone (PCL), l'alcool polyninylique (PVA) et l'acide polylactique (PLA), ce dernier pouvant également être obtenu au départ d'huile de colza et de ricin.

Le principal biopolymère obtenu par polymérisation de matières premières renouvelables est l'acide polylactique (PLA) qui peut convenir à la fabrication de films plastiques adéquats pour former ladite première couche supérieure du produit jetable suivant l'invention.

Les biopolymères bactériens biodégradables, obtenus principalement par fermentation, sont par exemple les polyhydroxyalcanoates (PHA) avec par exemple le polyhydroxybutyrate (PHB) ou le poly(hydroxybutyrate-co-hydroxyvalérate) (PHBV).

Le principal biopolymère synthétique biodégradable est l'alcool polyvinylique (PVOH) qui peut être utilisé dans le cadre de la présente invention pour former ladite première couche supérieure formant une barrière aux liquides du produit jetable suivant l'invention.

Des polymères d'origines fossiles tels que le polyéthylène (PE) ou le poly(téréphtalate) d'éthylène (PET) peuvent également convenir dès lors qu'ils sont associés à des additifs favorisant leur biodégradabilité (additifs DCP - Degradable Compostable Plastic), notamment par oxydation en milieu naturel.

Selon un autre mode de réalisation suivant l'invention, ladite au moins une première couche supérieure comprend un polymère choisi dans le groupe constitué des polyoléfines tels que le polypropylène et le polyéthylène, des polyesters tel que le polyéthylène téréphtalate, des polyamides tel que le nylon, de leurs copolymères et de leurs mélanges.

Dans ce cas, seule ladite couche inférieure comprenant au moins une couche en un matériau en papier ouaté gaufré est au moins partiellement biodégradable puisque ces polymères formant ladite couche supérieure formant une barrière aux liquides ne peuvent pas être dégradés en conditions naturelles, par exemple par des bactéries. Cependant, selon l'invention, comme mentionné plus haut, ladite couche supérieure formant une barrière aux liquides est une couche jetable qui peut être détachée sur l'ensemble de sa surface de ladite couche inférieure. Il est ainsi possible de séparer les deux couches, ce qui permet d'orienter la couche en un matériau en papier ouaté gaufré de ladite couche inférieure vers une filière où elle sera biodégradée ou recyclée tandis que ladite couche supérieure peut être jetée comme déchet non valorisable, ce qui réduit fortement le volume et le poids de la partie déchet non valorisable. Typiquement, ladite première couche formant une barrière aux liquides présente une épaisseur faible comme par exemple 20 µm, ce qui réduit considérablement l'impact environnemental de la première couche lorsqu'elle est non valorisable. Lorsque celle-ci est biodégradable, elle présentera dans tout les cas une épaisseur aussi faible que possible pour améliorer la vitesse de biodégradation du produit et ne pas rigidifier le produit stratifié jetable.

Afin de faciliter la séparation des deux couches, celle formant une barrière aux liquides et comprenant par exemple un polymère et celle comprenant au moins une couche en un matériau en papier ouaté gaufré, il est prévu, suivant l'invention, que ladite couche supérieure présente une excroissance ou une saillie vers l'extérieur, laquelle peut être saisie et tirée facilement afin d'amorcer et de permettre la séparation aisée desdites couches supérieure et inférieure dudit produit stratifié jetable.

Il est également prévu, suivant l'invention, comme autre moyen pour faciliter la séparation des deux couches, qu'un des angles de ladite couche supérieure ou de ladite couche inférieure soit dépourvu respectivement de ladite couche inférieure ou de ladite couche supérieure, ce qui permet de saisir facilement l'une des deux couches afin de la désolidariser de l'autre.

Selon encore un autre mode de réalisation suivant l'invention, ladite deuxième couche inférieure comporte une pluralité de couches en un matériau en papier ouaté gaufré, par exemple deux ou trois. Il a été montré qu'un tel produit stratifié présentant une couche inférieure agencée pour être en contact avec une surface de service et comprenant deux ou plusieurs couches en un matériau en papier ouaté gaufré est avantageux puisqu'il combine à la fois les caractéristiques de sensation de qualité recherchées à une utilisation réduite de matières premières pour obtenir cette qualité, et à une rigidité adéquate, tout en maintenant la souplesse.

Lorsque ladite deuxième couche inférieure comprend plus d'une couche en un matériau en papier ouaté gaufré, par exemple deux couches en un matériau en papier ouaté gaufré, ces deux couches sont assemblées l'une à l'autre par contrecollage. Il est bien entendu que ladite deuxième couche inférieure peut comprendre n'importe quel nombre de couches en un matériau en papier ouaté gaufré, par exemple, trois, quatre ou encore cinq couches en un matériau en papier ouaté gaufré.

De préférence, selon la présente invention, ladite deuxième couche inférieure présente une masse surfacique comprise entre 10 et 40 g/m², de préférence comprise entre 15 et 25 g/m² avant gaufrage. Cette masse surfacique (grammage) est déterminée selon la norme européenne NF EN ISO 12625-6:2005. Une telle masse surfacique de ladite deuxième couche inférieure confère une structure suffisamment rigide pour fournir une sensation de qualité tout en conférant une souplesse acceptable au produit jetable selon l'invention, de telle sorte que le marquage des plis soit optimal tout en gardant un produit suffisamment souple et léger qui peut facilement être mis en place sur une surface de service, par exemple sur une table ou sur un meuble. En effet, le marquage de plis doit être possible pour un conditionnement plié afin de minimiser le volume du produit, mais ce marquage doit également être le plus faible possible pour ne pas nuire à son esthétique une fois qu'il est mis en place sur une surface de service, par exemple sur une table.

Avantageusement, selon l'invention, ladite deuxième couche inférieure comprenant au moins une couche en un matériau en papier ouaté ou une pluralité de couches en un matériau en papier ouaté présentent une épaisseur comprise entre 50 et 200 µm, de préférence entre 100 et 150 µm avant gaufrage.

Avantageusement, selon l'invention, ladite deuxième couche inférieure comprenant au moins une couche en un matériau en papier ouaté gaufré ou une pluralité de couches en un matériau en papier ouaté gaufré présente une épaisseur comprise entre 75 et 600 µm, de préférence comprise entre 250 et 400 µm après gaufrage. Il a été montré qu'une telle épaisseur après gaufrage permet d'obtenir un produit selon l'invention qui est léger tout en procurant une sensation de qualité au toucher et en présentant des propriétés mécaniques adéquates, comme par exemple une résistance suffisante à des forces de traction.

De préférence, suivant la présente invention, ladite au moins une première couche supérieure présente une masse surfacique comprise entre 10 et 40 g/m², de préférence comprise entre 15 et 30 g/m².

Avantageusement, selon l'invention, ladite au moins une première couche supérieure présente une épaisseur comprise entre 10 et 40 µm, de préférence comprise entre 20 et 30 µm.

Une telle masse surfacique et une telle épaisseur de ladite première couche supérieure formant une barrière aux liquides permet son apposition sur ladite deuxième couche inférieure de manière à former une fine couche de polymère souple, ayant un impact réduit sur l'environnement.

De préférence, selon la présente invention, ledit produit stratifié et jetable est une nappe.

D'autres formes de réalisation d'un produit stratifié jetable suivant l'invention sont indiquées dans les revendications annexées.

La présente invention a aussi pour objet un procédé de fabrication d'un produit stratifié jetable comprenant au moins une première couche supérieure et au moins une deuxième couche inférieure comprenant au moins une couche en un matériau en papier ouaté, ledit procédé comprenant les étapes suivantes :
- une amenée et un gaufrage de ladite au moins une deuxième couche inférieure entre au moins deux rouleaux de gaufrage,
- une amenée de ladite au moins une deuxième couche inférieure gaufrée entre au moins deux rouleaux de calandrage,
- une amenée simultanée de ladite au moins une première couche supérieure par-dessus ladite au moins une deuxième couche inférieure gaufrée entre lesdits au moins deux rouleaux de calandrage,
- un contrecollage par calandrage desdites au moins une première couche supérieure et au moins une deuxième couche inférieure
gaufrée entre lesdits au moins deux rouleaux de calandrage, caractérisé en ce que ladite étape de contrecollage par calandrage est réalisée par projection à chaud de colle entre lesdites au moins une première couche supérieure et au moins une deuxième couche inférieure.

Par les termes « contrecollage par calandrage », on entend, au sens de la présente invention, une opération selon laquelle au moins deux couches sont collées ensemble grâce à un adhésif approprié, par exemple de la colle, lesdites au moins deux couches passant entre au moins deux rouleaux de calandrage pour être pressées l'une contre l'autre.

Un tel procédé de fabrication est particulièrement avantageux pour la fabrication d'un produit stratifié jetable suivant l'invention puisqu'il permet, par un contrecollage par calandrage réalisé par projection à chaud de colle entre lesdites au moins une première couche supérieure et au moins une deuxième couche inférieure, de doser précisément la quantité de colle appliquée pour contrecoller et donc lier ladite première couche supérieure et ladite deuxième couche inférieure en minimisant significativement la quantité de colle appliquée dans un souci de respect de l'environnement.

La projection de colle à chaud peut être réalisée sur l'ensemble de la surface de contact entre ladite première couche supérieure et la dite deuxième couche inférieure ou uniquement sur une ou plusieurs zones prédéterminées.

De préférence, selon le procédé de la présente invention, lesdites étapes de contrecollage par calandrage sont réalisées par projection à chaud d'une quantité en poids de colle comprise entre 2 et 5%, de préférence comprise entre 3 et 4% en poids, par rapport au poids total dudit produit stratifié jetable.

Avantageusement, suivant l'invention, ladite colle projetée à chaud lors desdites étapes de contrecollage par calandrage est une colle non aqueuse obtenue par la fonte de grains solides dans une cuve sans aucun ajout d'eau, ce qui est favorable à une application de colle par projection à chaud. En outre, il est particulièrement avantageux d'employer une colle non aqueuse lorsque la première couche supérieure formant une barrière aux liquides est formée au départ d'un polymère biodégradable lequel aurait tendance à se dégrader en présence d'eau et à perdre ses propriétés d'étanchéité.

Avantageusement, selon le procédé de la présente invention, lesdites projections à chaud de colle sont réalisées par projection d'une colle biodégradable, par exemple à base d'amidon végétal. L'utilisation d'une colle biodégradable pour réaliser l'assemblage desdites première et deuxième couches permet, lorsque ladite couche supérieure est formée au départ d'un biopolymère, de disposer d'un produit multicouche 100 % biodégradable et donc 100 % respectueux de l'environnement puisque chacune de ses couches comprend un matériau totalement naturel reliée par un agent collant également naturel et biodégradable.

De préférence, selon le procédé de la présente invention, lesdites projections à chaud de colle sont réalisées par projection d'une colle synthétique. Même si une telle colle n'est pas biodégradable, le procédé suivant l'invention permet de n'en appliquer qu'une très faible quantité de l'ordre de quelques % en poids par rapport au poids total du produit jetable suivant l'invention, ce qui minimise l'impact de cet agent liant sur l'environnement ainsi que les quantités de matières premières utilisées.

En outre, l'application d'une faible quantité en poids de colle par projection à chaud assure sa répartition homogène sur l'ensemble de la surface ou sur la ou les zones prédéterminées de ladite première couche supérieure et/ou sur l'ensemble ou sur la ou les zones prédéterminées de la surface de ladite deuxième couche inférieure, ce qui rend le collage homogène sur l'ensemble ou sur certaines parties de l'interface comprise entre ces deux couches dudit produit jetable selon l'invention. Ce collage homogène en épaisseur sur certaines parties ou sur toute l'interface est particulièrement avantageux, pour, comme prévu selon la présente invention, une désolidarisation desdites première et deuxième couche est réalisée. En effet, grâce à la répartition homogène d'une faible quantité en poids de colle, le produit jetable suivant l'invention ne présente pas de zones où l'adhérence entre lesdites couches est trop importante, ce qui permet de séparer totalement les deux couches l'une de l'autre sans que le polymère de ladite couche supérieure ne reste accroché à ladite couche inférieure comprenant au moins une couche en un matériau en papier ouaté gaufré. Ainsi, de façon tout à fait avantageuse, la couche inférieure et la couche supérieure du produit jetable suivant l'invention peuvent être isolées aisément l'une de l'autre.

Par ailleurs, le fait de réduire fortement les quantités de colle appliquées permet de minimiser les coûts de production et l'impact environnemental d'un produit multicouche jetable suivant l'invention.

En outre, grâce à ladite étape de gaufrage de ladite au moins une deuxième couche inférieure par passage entre au moins deux rouleaux de gaufrage placés en amont desdits au moins deux rouleaux de calandrage, de conférer, à ladite au moins une deuxième couche inférieure comprenant au moins une couche en un matériau en papier ouaté, un certain relief par déformation suite à l'application d'une forte pression entre des rouleaux de gaufrage. Le relief ainsi obtenu contribue à la sensation de qualité conférée au produit par ladite au moins une couche en un matériau en papier ouaté gaufré. En outre, le gaufrage offre la possibilité de disposer d'un produit à la fois léger et présentant une structure qui a du volume donnant une sensation de qualité au toucher en utilisant nettement moins de matières premières par rapport aux produits jetables actuellement disponibles.

Si ladite deuxième couche inférieure dudit produit suivant l'invention comprend une pluralité de couches en un matériau en papier ouaté gaufré, par exemple deux couches en un matériau en papier ouaté gaufré, chacune de ces couches peut être soumise à une étape de gaufrage entre une paire de rouleaux de gaufrage avant d'être entrecollées.

Eventuellement, selon la présente invention, lorsque chacune desdites couches formant ladite deuxième couche inférieure est soumise à une étape distincte de gaufrage, au moins une desdites couche gaufrée est retournée avant d'être superposée sur une autre couche gaufrée non retournée, de telle sorte que les reliefs obtenus par gaufrage sur chaque surface de chacune des couches se positionnent les uns en face des autres, ce qui permet d'éviter que lesdits reliefs d'une couche ne s'insèrent dans les creux d'une autre couche lors de leur passage simultané entre au moins deux rouleaux de calandrage pour les entrecoller. Avantageusement, ce retournement d'au moins une des couches permet d'optimiser le volume conféré à ladite deuxième couche inférieure, les reliefs de chaque couche se faisant face.

Avantageusement, ladite étape de gaufrage augmente l'épaisseur de ladite au moins une deuxième couche inférieure d'au moins 150 %, de préférence d'au moins 200 %, plus préférentiellement d'au moins 300 %. Il a été montré qu'une telle augmentation d'épaisseur permet d'obtenir un produit stratifié jetable qui est de qualité identique, voire supérieure par rapport à un produit jetable en papier existant actuellement, tout en réduisant drastiquement la quantité de matières premières utilisées essentiellement pour former ladite deuxième couche inférieure en un matériau en papier ouaté.

Avantageusement, ladite étape d'amenée de ladite au moins une deuxième couche inférieure entre au moins deux rouleaux de calandrage est précédée par une étape de contrecollage par calandrage préalable réalisée par projection à chaud de colle entre deux couches en un matériau en papier ouaté gaufré de telle sorte que ladite deuxième couche inférieure comprend deux sous-couches en un matériau en papier ouaté gaufré entrecollées.

De préférence, ledit procédé de fabrication selon l'invention comprend en outre des étapes additionnelles de pliage et/ou d'enroulage et/ou de conditionnement dudit produit stratifié jetable. Ces étapes additionnelles permettent un conditionnement et un stockage des produits obtenus, ces derniers pouvant par ailleurs être directement emballées et destinés à la vente.

Avantageusement, selon le procédé de la présente invention, ladite étape d'amenée de ladite au moins une première couche supérieure est précédée par une étape d'impression d'au moins un motif sur au moins une partie de la surface de cette dernière. Il est dès lors possible d'apposer des motifs par impression de ladite première couche formant une barrière aux liquides, ce qui est particulièrement avantageux afin de diversifier la présentation des produits obtenus. Une impression de l'ensemble de la surface de ladite au moins une première couche est également possible suivant l'invention. De préférence, ladite impression est réalisée à l'aide d'une encre biodégradable et non toxiques pour l'environnement, par exemple à l'aide d'une encre dont le solvant est de l'eau.

Avantageusement, selon le procédé de la présente invention, ladite étape d'amenée de ladite au moins une deuxième couche inférieure est précédée par une étape d'impression d'au moins un motif sur au moins une partie de la surface de cette dernière. Une impression de l'ensemble de la surface de ladite au moins une deuxième couche est également possible suivant l'invention.

D'autres formes de réalisation du procédé de fabrication d'un produit stratifié jetable suivant l'invention sont indiquées dans les revendications annexées.

La présente invention porte également sur une nappe de table obtenue selon le procédé suivant l'invention.

D'autres formes de réalisation d'une nappe de table obtenue selon le procédé suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une première vue en coupe d'un produit stratifié jetable selon l'invention.
La figure 2 est une autre vue en coupe d'un produit stratifié jetable selon l'invention.
La figure 3 est une première représentation schématique d'un dispositif pour fabriquer un produit stratifié jetable selon l'invention.
La figure 4 est une autre représentation schématique d'un dispositif pour fabriquer un produit stratifié jetable selon l'invention.
La figure 5 est encore une autre représentation schématique d'un dispositif pour fabriquer un produit stratifié jetable selon l'invention.

Sur les figures, les éléments identiques ou analogues portent les mêmes références.

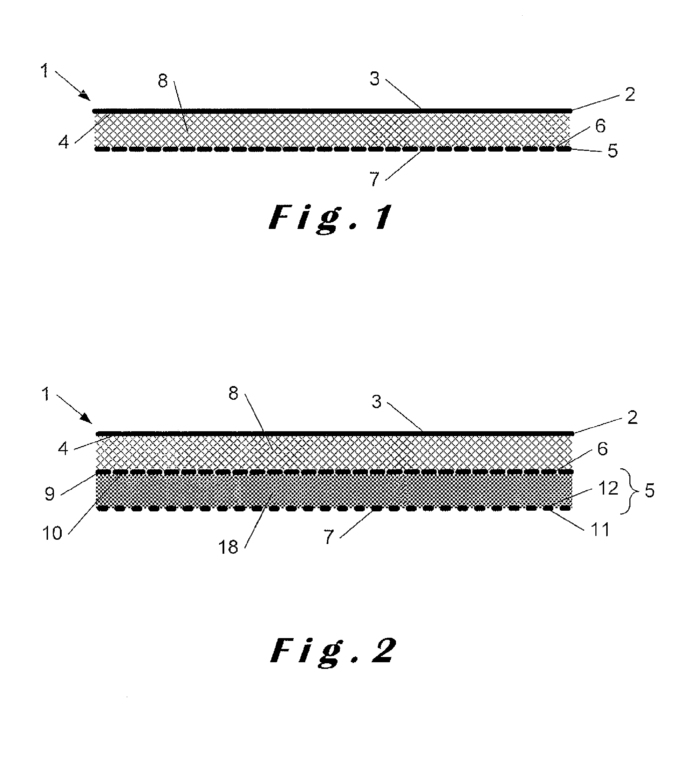

La figure 1 est une vue en coupe d'un produit stratifié jetable 1 selon l'invention et qui comprend une première couche supérieure 2 présentant une face frontale 3 et une face dorsale 4 et formant une barrière aux liquides et une deuxième couche inférieure en un matériau en papier ouaté gaufré 5 présentant une face frontale 6 et une face dorsale 7, ladite deuxième couche inférieure 5 étant liée à ladite première couche supérieure 2 par l'intermédiaire d'une couche de colle 8 appliquée par projection à chaud sur la face dorsale 4 de ladite couche supérieure 2 et/ou sur ladite face frontale 6 de ladite couche inférieure en un matériau en papier ouaté gaufré ouaté 5 lors d'une étape de contrecollage desdites couches supérieure 2 et inférieure 5.

La figure 2 est une autre vue en coupe d'un produit stratifié jetable 1 selon l'invention et qui comprend une première couche supérieure 2 présentant une face frontale 3 et une face dorsale 4 et formant une barrière aux liquides et une deuxième couche inférieure 5 présentant une face frontale 6 et une face dorsale 7 et comprenant une première couche en un matériau en papier ouaté gaufré 9 présentant une face frontale 6 et une face dorsale 10 ainsi qu'une deuxième sous-couche d'un matériau en papier ouaté gaufré 11 présentant une face frontale 12 et une face dorsale 7, ces dernières étant assemblée par projection à chaud de colle sur la face dorsale 10 de ladite première couche d'un matériau en papier ouaté gaufré 9 et/ou sur ladite face frontale 12 de ladite deuxième sous-couche d'un matériau en papier ouaté gaufré 11 lors d'une étape de contrecollage de ladite première couche 9 et de ladite deuxième sous-couche 11 en un matériau en papier ouaté gaufré, ladite deuxième couche inférieure 5 étant liée à ladite première couche supérieure 2 par l'intermédiaire d'une couche de colle 8 appliquée par projection à chaud sur la face dorsale 4 de ladite couche supérieure 2 et/ou sur ladite face frontale 6 de ladite couche inférieure 5 lors d'une étape de contrecollage desdites couches supérieure 2 et inférieure 5.

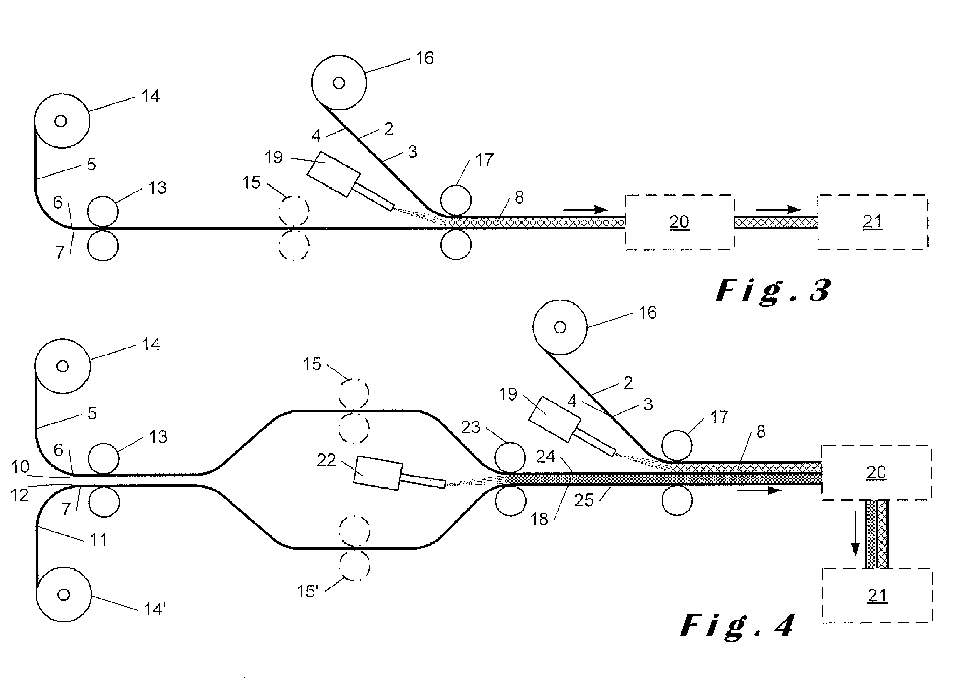

La figure 3 est une représentation schématique d'un dispositif pour fabriquer un produit stratifié jetable selon l'invention tel qu'illustré à la figure 1. Ce dispositif comprend une première paire de rouleaux de guidage 13 entre lesquels est alimentée, au départ d'une bobine de distribution 14, ladite deuxième couche en un matériau en papier ouaté 5 présentant une face frontale 6 et une face dorsale 7. Cette couche en un matériau en papier ouaté 5 passe ensuite entre deux rouleaux de gaufrage 15 agencés pour donner du relief au matériau en papier ouaté 5 et ainsi obtenir un matériau en papier ouaté 5 gaufré. Ensuite, ledit matériau en papier ouaté 5 gaufré passe entre une paire de rouleaux de calandrage 17 au niveau desquels est alimentée au départ d'une bobine de distribution 16, par dessus ladite deuxième couche en un matériau en papier ouaté 5 gaufré, la première couche imperméable aux liquides 2 présentant une face frontale 3 et une face dorsale 4, de telle sorte que la face frontale 6 de ladite deuxième couche inférieure en un matériau en papier ouaté 5 gaufré fasse face à la face dorsale 4 de ladite première couche supérieure formant une barrière aux liquides 2. De la colle 19 est projetée à chaud sur ladite face frontale 6 de ladite deuxième couche en un matériau en papier ouaté 5 gaufré et/ou sur ladite face dorsale 4 de ladite première couche formant une barrière aux liquides 2 entre ladite paire de rouleaux de calandrage 17 de telle sorte qu'une couche homogène de colle 8 est appliquée avant que ladite paire de rouleaux de calandrage 17 ne comprime lesdites première 2 et deuxième 5 couches ensemble l'une contre l'autre pour assurer leur contrecollage.

Eventuellement, suite au contrecollage desdites première 2 et deuxième 5 couches, le produit stratifié jetable obtenu progresse vers une unité de pliage ou d'enroulage 20 placée éventuellement en amont d'une unité d'emballage 21 du produit multicouche obtenu plié ou enroulé.

La figure 4 est une représentation schématique d'un dispositif pour fabriquer un produit stratifié jetable selon l'invention tel qu'illustré à la figure 2. Ce dispositif comprend une première paire de rouleaux de guidage 13 entre lesquels est alimentée, au départ d'une première bobine de distribution 14, une première couche en un matériau en papier ouaté 9 présentant une face frontale 6 et une face dorsale 10 et, au départ d'une deuxième bobine de distribution 14', une deuxième sous-couche en un matériau en papier ouaté 11 présentant une face frontale 12 et une face dorsale 7. Chacune de ces couches en un matériau en papier ouaté 9, 11 passe séparément entre une paire de rouleaux de gaufrage 15, 15' agencée pour donner du relief au matériau en papier ouaté pour obtenir un matériau en papier ouaté 9, 11 gaufré avant de passer ensemble entre deux rouleaux de calandrage 23 où de la colle 22 est projetée à chaud sur ladite face dorsale 10 de ladite première couche en un matériau en papier ouaté 9 gaufré et/ou sur ladite face frontale 12 de ladite deuxième sous-couche en un matériau en papier ouaté 11 gaufré de telle sorte qu'une couche homogène de colle 18 est appliquée, avant que ladite paire de rouleaux de calandrage 23 ne comprime lesdites première couche 9 et deuxième 11 sous-couche en un matériau en papier ouaté gaufré l'une contre l'autre pour assurer leur contrecollage et ainsi former la deuxième couche inférieure dudit produit stratifié jetable présentant une face frontale 24 et une face dorsale 25. Ces deux couches en un matériau en papier ouaté 9, 11 gaufré une fois contrecollées et formant la deuxième couche inférieure dudit produit stratifié jetable progressent ensuite vers une paire de rouleaux de calandrage 17 au niveau desquels est alimentée au départ d'une bobine de distribution 16, par dessus ladite deuxième couche inférieure dudit produit jetable, la première couche formant une barrière aux liquides 2 présentant une face frontale 3 et une face dorsale 4, de telle sorte que la face frontale 24 de ladite deuxième couche inférieure fasse face à la face dorsale 4 de ladite première couche imperméable aux liquides 2. De la colle 19 est projetée à chaud sur ladite face frontale 24 de ladite deuxième couche inférieure dudit produit stratifié jetable et/ou sur ladite face dorsale 4 de ladite première couche formant une barrière aux liquides 2 entre ladite paire de rouleaux de calandrage 17 de telle sorte qu'une couche homogène de colle 8 est appliquée avant que ladite paire de rouleaux de calandrage 17 ne comprime ladite couche inférieure dudit produit stratifié jetable et ladite première couche formant une barrière aux liquides 2 l'une contre l'autre pour assurer leur contrecollage.

Eventuellement, suite au contrecollage de ladite deuxième couche inférieure et de ladite première couche formant une barrière aux liquides 2, le produit stratifié jetable obtenu progresse vers une unité de pliage ou d'enroulage 20 placée éventuellement en amont d'une unité d'emballage 21 du produit multicouche obtenu plié ou enroulé.

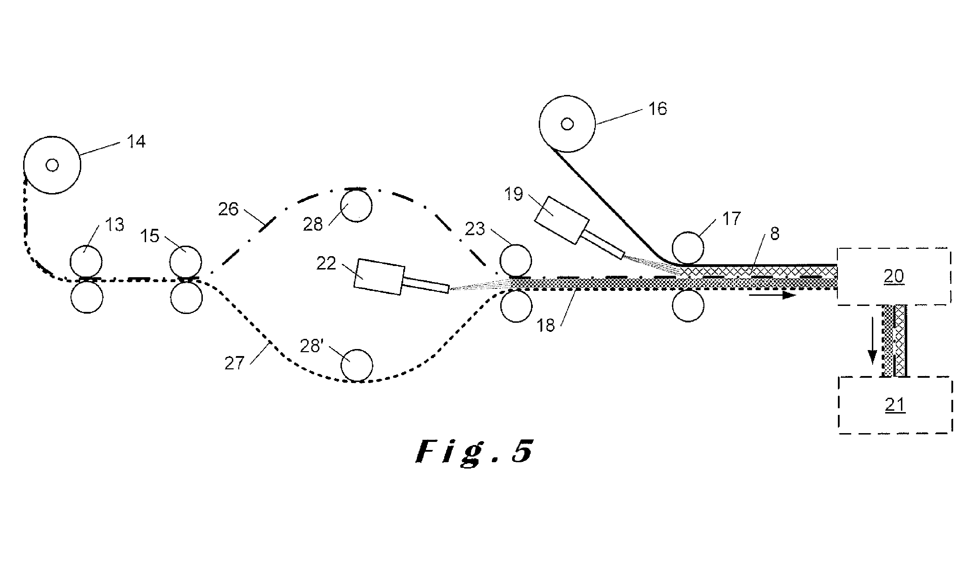

La figure 5 est une autre représentation schématique d'un dispositif pour fabriquer un produit stratifié jetable selon l'invention. Selon ce dispositif, la bobine de distribution 14 comprend plusieurs couches de papier ouaté non solidaires l'une de l'autre mais simplement superposées les unes sur les autres 26, 27.

Ce dispositif comprend une première paire de rouleaux de guidage 13 entre lesquels est alimentée ladite deuxième couche en un matériau en papier ouaté 5 qui comprend deux couches en un matériau en papier ouaté 26, 27. Ensuite cette deuxième couche 5 passe entre une paire de rouleaux de gaufrage 15 agencés pour donner du relief simultanément aux deux couches en un matériau en papier ouaté 26, 27. Suite à ce gaufrage, lesdites deux couches en un matériau en papier ouaté 26, 27 sont séparées par l'intermédiaire de deux rouleaux séparateurs 28, 28'. Suivent alors des étapes similaires à celles décrites pour la figure 4 depuis le passage entre les deux rouleaux de calandrage 23 jusqu'à l'éventuelle étape d'emballage au niveau d'une unité d'emballage 21.

### Essais

Dans le cadre de la présente invention, afin de déterminer si le produit stratifié jetable obtenu suivant l'invention présente bien différentes couches séparables (pelables) l'une de l'autre sur l'ensemble de leur surface, des essais de contrecollage par projection à chaud de colle entre ces différentes couches ont été réalisés.

Pour ce faire, entre deux rouleaux de calandrage, une colle non aqueuse a été projetée à chaud (température moyenne de 137,5°C) via des aiguilles (Oméga 6) à raison de 0,3 à 2,5 g/m² entre une couche inférieure en un matériau en papier ouaté gaufré et une couche supérieure en polyéthylène (PE) formant une barrière au liquide, chacune de ces couches progressant à une même vitesse de 50 m/min entre les deux rouleaux de calandrage.

Une quantité de colle de 1 g/m² correspond à une quantité en poids de colle environ égale à 2% par rapport au poids total du produit stratifié jetable obtenu.

Les résultats obtenus sont présentés dans le tableau ci-dessous :

| Essai | Quantité de colle g/m² | Adhérence entre les couches | Séparation des couches l'une par rapport à l'autre |
|---|---|---|---|
| 1 | 2,5 | Oui | Oui |
| 2 | 1 | Oui | Oui |
| 3 | 0,5 | Oui mais faible | Oui |
| 4 | 0,3 | Oui mais faible | Oui |

Il ressort de ces essais qu'un produit stratifié jetable dont les différentes couches sont détachables (séparables) l'une de l'autre sur l'ensemble de leur surface peut être obtenu par assemblage de ces différentes couches par contrellage par projection à chaud de colle, que la quantité de colle projetée soit de 0,3 ; 0,5 ; 1 ou 2,5 g/m². Une adhérence entre les couches a été observée pour chacune des quantités de colle testée avec une adhérence plus appropriée lors d'une projection de colle à raison de 1 à 2,5 g/m². Une projection à chaud de colle à raison de 0,3 ou 0,5 g/m² permet également d'obtenir un produit stratifié jetable suivant l'invention mais une adhérence moindre a été observée entre couches.

Il est bien entendu que la présente invention n'est en aucune façon limitée aux formes de réalisation décrites ci-dessus et que bien des modifications peuvent y être apportées sans sortir du cadre des revendications annexées.

## Revendications

1. Produit stratifié jetable (1) comprenant au moins une première couche supérieure (2) formant une barrière aux liquides et agencée pour être visible lors d'une utilisation dudit produit (1) et au moins une deuxième couche inférieure (5) en un matériau en papier ouaté gaufré agencée pour être en contact avec une surface de service et liée à ladite première couche supérieure (2), **caractérisé en ce que** ladite première couche supérieure (2) et ladite deuxième couche inférieure (5) sont détachables l'une de l'autre.

2. Produit stratifié jetable (1) selon la revendication 1, **caractérisé en ce que** ladite deuxième couche inférieure (5) comprend une pluralité de couches en un matériau en papier ouaté (9, 11) gaufré.

3. Produit stratifié jetable (1) selon la revendication 1 ou 2, caractérisé en ce ladite deuxième couche inférieure (5) présente une masse surfacique comprise entre 10 et 40 g/m², de préférence comprise entre 15 et 25 g/m².

4. Produit stratifié jetable (1) selon l'une quelconque des revendications 1 à 3, **caractérisé en ce que** ladite deuxième couche inférieure (5) comprenant au moins une couche en un matériau en papier ouaté (9) ou une pluralité de couches en un matériau en papier ouaté (9) présente une épaisseur comprise entre 50 et 200 µm, de préférence comprise entre 100 et 150 µm avant gaufrage.

5. Produit stratifié jetable (1) selon l'une quelconque des revendications 1 à 4, **caractérisé en ce que** ladite deuxième couche inférieure (5) comprenant au moins une couche en un matériau en papier ouaté (9) ou une pluralité de couches en un matériau en papier ouaté (9) présente une épaisseur comprise entre 75 et 600 µm, de préférence comprise entre 350 et 400 µm après gaufrage.

6. Produit stratifié jetable (1) selon l'une quelconque des revendications 1 à 5, **caractérisé en ce que** ladite au moins une première couche supérieure (2) présente une épaisseur comprise entre 10 et 40 µm, de préférence comprise entre 20 et 30 µm.

7. Produit stratifié jetable (1) **caractérisé en ce qu'**il est une nappe.

8. Procédé de fabrication d'un produit stratifié jetable (1) comprenant au moins une première couche supérieure (2) et au moins une deuxième couche inférieure (5) comprenant au moins une couche en un matériau en papier ouaté (9), ledit procédé comprenant les étapes suivantes :
- une amenée et un gaufrage de ladite au moins une deuxième couche inférieure entre au moins deux rouleaux de gaufrage,
- une amenée de ladite au moins une deuxième couche inférieure gaufrée (5) entre au moins deux rouleaux de calandrage (17),
- une amenée simultanée de ladite au moins une première couche supérieure (2) par-dessus ladite au moins une deuxième couche inférieure gaufrée (5) entre lesdits au moins deux rouleaux de calandrage (17),
- un contrecollage par calandrage desdites au moins une première couche supérieure (2) et au moins une deuxième couche inférieure gaufrée (5) entre lesdits au moins deux rouleaux de calandrage (17),
**caractérisé en ce que** ladite étape de contrecollage par calandrage est réalisée par projection à chaud de colle entre lesdites au moins une première couche supérieure et au moins une deuxième couche inférieure.

9. Procédé de fabrication selon la revendication 8, **caractérisé en ce que**, lorsque chacune desdites couches de ladite deuxième couche inférieure est soumise à une étape distincte de gaufrage, au moins une desdites couche gaufrée est retournée avant d'être superposée sur une autre couche gaufrée non retournée, de telle sorte que les reliefs obtenus par gaufrage sur chaque surface de chacune des couches se positionnent les uns en face des autres.

10. Procédé de fabrication selon la revendication 8 ou 9, **caractérisé en ce que** ladite étape de gaufrage augmente l'épaisseur de ladite au moins une deuxième couche inférieure (5) d'au moins 150 %, de préférence d'au moins 200 %, plus préférentiellement d'au moins 300%.

11. Procédé de fabrication selon l'une quelconque des revendications 8 à 10, **caractérisé en ce que** ladite étape d'amenée de ladite au moins une deuxième couche inférieure (5) entre au moins deux rouleaux de calandrage (17) est précédée par une étape de contrecollage par calandrage préalable réalisée par projection à chaud de colle (22) entre deux couches en un matériau en papier ouaté (9, 11) gaufré de telle sorte que ladite deuxième couche inférieure (5) comprend deux couches en un matériau en papier ouaté (9, 11) gaufré contrecollées.

12. Procédé de fabrication selon l'une quelconque des revendications 8 à 11, **caractérisé en ce que** lesdites étapes de contrecollage par calandrage sont réalisées par projection à chaud d'une quantité en poids de colle (19, 22) comprise entre 2 et 5%, de préférence comprise entre 3 et 4% en poids, par rapport au poids total dudit produit stratifié jetable (1).

13. Procédé de fabrication selon l'une quelconque des revendications 8 à 12, **caractérisé en ce que** lesdites projections à chaud de colle (19, 22) sont réalisées par projection d'une colle biodégradable, par exemple à base d'amidon végétal, ou d'une colle synthétique.

14. Procédé de fabrication selon l'une quelconque des revendications 8 à 13, **caractérisé en ce que** lesdites projections à chaud de colle (19, 22) sont réalisées par projection d'une colle non aqueuse.

15. Nappe de table obtenue selon le procédé selon l'une quelconque des revendications 8 à 14.
